# EUROPEAN PATENT APPLICATION

(11) **EP 1 430 824 A1**
(43) Date of publication of application: **23.06.2004**
(21) Application number: 03425808.7
(22) Date of filing: 18.12.2003
(51) Int. Cl.: A47J 43/044, A47J 43/08, B01F 7/30, A21C 1/14

(54) **Multi-functional catering equipment**

(30) Priority: 20.12.2002 IT AN20020060
(71) Applicant: Granatiero S.R.L., 63100 Ascoli Piceno (AP) (IT)
(72) Inventor: Granatiero, Massimo Davide, 63100 Ascoli Piceno (AP) (IT)
(74) Representative: Baldi, Claudio, Ing.

(57) **Abstract**

The present invention refers to a multifunctional food-processing equipment (1) capable of operating as mixer, blender and cutter.

The typical movements used to mix, blend and cut are simultaneously possible thanks to a kinematic motion comprising the planetary and rotatory eccentric movement of the support that holds the mixing and blending utensils, which is coaxially mounted to the main shaft used to move the support that holds the cutting utensil.

Additional high and low-speed power take-off (21, 22) are provided for the connection of additional utensils.

The invention uses containers (23) with different shape that can be heated or cooled by the equipment (1) as necessary.

## Description

### Multifunctional catering equipment

The present invention refers to a food-processing equipment capable of operating as mixer, blender and cutter.

The sector of domestic and professional catering includes a large variety of small mixers with different accessories, characterised by similar operation and construction.

In standard mixers, of the type generally used in bakeries, patisseries or homes, the mixing utensil is moved by a hub located on an arm above the container.

The mixer is in eccentric position with respect to the container below with the food to be mixed, thus allowing for reaching the internal parts of the container with planetary motion. As a matter of fact, in addition to rotating on its axis, the mixing utensil moves according to a planetary motion around the container walls.

In another model of mixers, the mixing utensil is eccentric with respect to the container and simply rotates around its axis, with no planetary motion. The mixing utensil reaches the internal parts of the container thanks to the rotatory motion of the container itself. This model of mixers is known as "mixers with mobile container".

Typical speeds of planetary motion or container rotation normally range between 50 and 200 rpm, and the rotatory movement of the mixing utensil around its axis reaches the speed of 200 - 800 rpm.

The mixing utensil can have different configurations according to the product to be processed. The most common configurations include the "spiral" configuration for solid masses, also defined as "hook", and the "leaf" configuration for softer masses.

Another model of mixers is represented by whisks, with a variable number of wires and different cross-sections, suitable for processing lighter masses and used to beat or whip up patisserie products.

Moreover, some models of mixers are provided with a scraping utensil used to scrape the container walls. The scraper is positioned on the planetary mechanism, or fixed directly to the arm in case of rotating container.

Some models of mixers are provided with power take-offs for accessories. A front power take-off is used to attach utensils with slow rotation speed, such as meat mincers or graters, which operate at 200 rpm; in some instances, a power take-off is provided on the drive shaft for high speed utensils, which operate as the same speed as the engine (approximately 15,000 rpm).

It must be noted that the mixer family also includes blenders.

Another type of equipment is represented by mixers, also hot-mixers, for the preparation of creamy products and, generally speaking, products that need cooking and continuous mixing.

Having a similar construction, they are normally provided with a mixing spatula that rotates around its axis at low speed.

The container is provided with a space that contains oil or steam to ensure uniform internal temperature during the operation. The container is heated with an oil bath when hot creams are prepared.

Another common equipment is the cutter, used to cut and chop the ingredients in the container.

In typical cutters available on the market, the cutting utensil is moved by a hub located in the centre of the container bottom, unlike typical mixers, in which the mixing utensil enters the container from above.

The cutting utensil rotates around its axis at a typical speed of 2,000 - 3,000 rpm and is generally provided with one or more blades with different shape according to the specific function: sharp blades to chop, serrated blades to mince, blades without sharp edge to crush, blades with holes to emulsify.

Likewise mixers, some models of cutters operate in vacuum or steam conditions to provide better mixing.

In view of the above, in order to use the aforementioned mixers, hot mixers and cutters of known type, it is necessary to use different equipment, that is to say a blender, a mixer and a cutter.

Another disadvantage is represented by the fact that the need to use different machines requires space, being this a considerable drawback especially for small patisseries, bakeries or domestic environments.

Another disadvantage occurs in case of products that require different types of processing - being this a very common situation especially for bakeries and restaurants. In this case, the user must wait until the tool, for example the cutter, has completed the processing operation before pouring the food into another tool, for example the mixer, thus causing a general slowdown in the preparation process, with the need to calculate processing time very accurately to ensure the optimal characteristics of the final product.

The main purpose of the present invention is to overcome the aforementioned drawbacks, by devising a catering equipment capable of being used as mixer, blender, beater, hot mixer and cutter, also provided with fast cooling of ingredients for each processing stage.

An additional purpose of the present invention is to allow for simultaneous execution of different processing modes in order to considerably reduce food processing time, with sudden temperature changes to reduce the bacteria developed during thermal processing.

Another purpose of the equipment of the invention is to provide additional high and low-speed power take-offs for additional utensils.

Another purpose of the equipment of the present invention is to provide containers with different shape capable of being heated or cooled for specific food processing.

The aforementioned purposes are obtained with a multifunctional catering equipment as defined in the enclosed claims, which are an integral part of the present description.
In the following description reference is not made to known members that are necessary for correct mechanical operation, such as bearing, brasses, shoulders, pins, fixing means, etc., which are however shown in the enclosed figures, which are intended for purposes of illustration and not in a limiting sense, whereby:
- Fig. 1 is a perspective view of the multifunctional equipment of the invention;
- Fig. 2 is a side cross-section of the kinematic mechanisms of the multifunctional equipment of the invention;
- Fig. 3 is a diagrammatic top view of the kinematic mechanisms of the multifunctional equipment of the invention;
- Fig. 4 is a diagrammatic view of the kinematic mechanisms according to cross-section A-A of the multifunctional equipment of the invention;
- Fig. 5 is the same view as Fig. 2, shown in the body of the multifunctional equipment of the invention;
- Fig. 6 is the same view as Fig. 3, shown in the body of the multifunctional equipment of the invention;
- Fig. 7 is a perspective view of the multifunctional equipment of the invention, with cross-sectioned container showing the mixer and scraper;
- Fig. 8 is a perspective view of the multifunctional equipment of the invention, with cross-sectioned container showing the mincer and scraper;
- Fig. 9 is a perspective view of the multifunctional equipment of the invention, with cross-sectioned container showing the blender;
- Fig. 10 is a perspective view of the multifunctional equipment of the invention without container;
- Fig. 11 is a perspective view of the multifunctional equipment of the invention with the utensil-holding arm in raised position;
- Fig. 12 is a perspective view of the multifunctional equipment of the invention with the utensil-holding arm in raised position, showing the centring support for mincer and blender;
- Fig. 13 is a cross-section of the centring support for mincer and blender.

The description continues with the main characteristics of the invention, using the reference numbers contained in the figures.

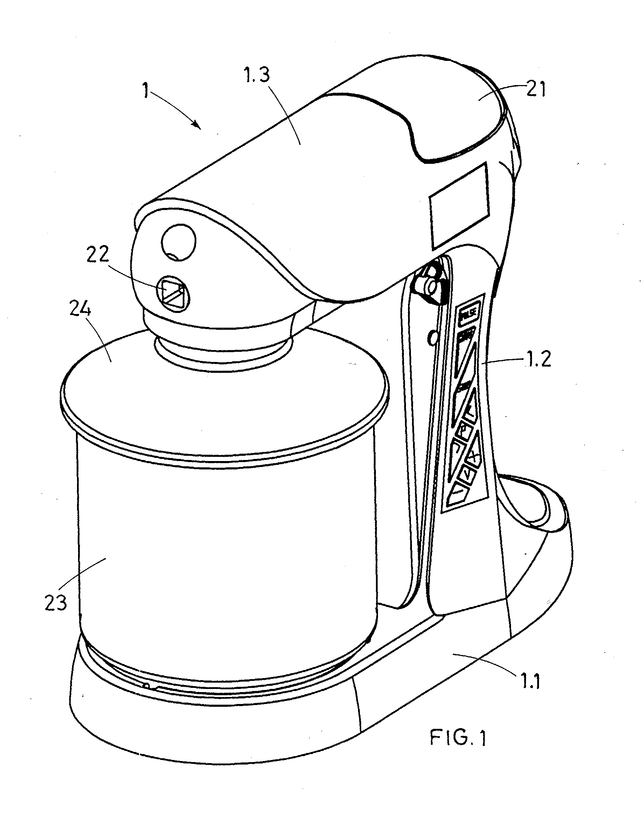

Fig. 1 illustrates the multifunctional equipment 1 with body composed of a base 1.1, whose front part supports the container 23. The rear part of the base 1.1 houses the vertical support structure 1.2 of the arm 1.3 that protrudes horizontally towards the container 23. The lid 24 of the container 23 is associated with the arm 1.3.

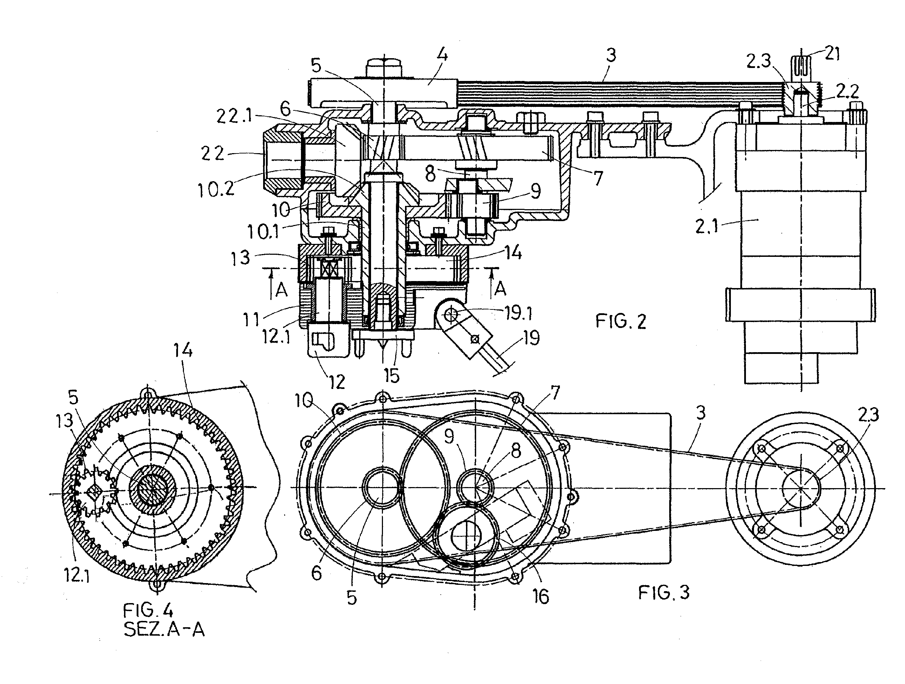

Figures 2, 3, 4, 5 and 6 show the mechanisms that provide motion for mixing, blending and cutting. In the following description the term "mixing" also refers to "blending" and "beating". It must be noted that the transmission gears are merely indicative, not binding and referred to a preferred embodiment of the multifunctional equipment of the invention. Also operation speeds are merely indicative, depending on the adjustment field of the electric engine 2.1.

With reference to Figs. 2, 3 and 4, 2.1 indicates a typical electric engine capable of operation at variable speed, with maximum speed of 15,000 rpm. 2.3 indicates a pulley splined to the shaft 2.2 of the electric engine 2.1. Through the driving belt 3 and the pulley 4 splined to the main shaft 5, the motive power of the electric engine 2.1 is transferred to the main high-speed shaft 5 with typical 1/5 reduction gear.

The transmission mechanism between the pulley 2.3 and the pulley 4 allows the main shaft 5 to rotate at maximum speed of 3,000 rpm. The lower end of the shaft 5 is equipped with the support 15 for cutting tools operating at maximum speed of 3,000 rpm.

The pinion 6 is splined to the main shaft 5 and engages with gearwheel 7 splined on the idling shaft 8. The transmission gear between the pinion 6 and the gearwheel 7 is 1/4, thus allowing the idling shaft 8 to rotate around its axis at a speed of about 800 rpm.

According to a preferred embodiment, the pinion 6 and the gearwheel 7 can have a helicoidal configuration to reduce the noise generated by the gear.

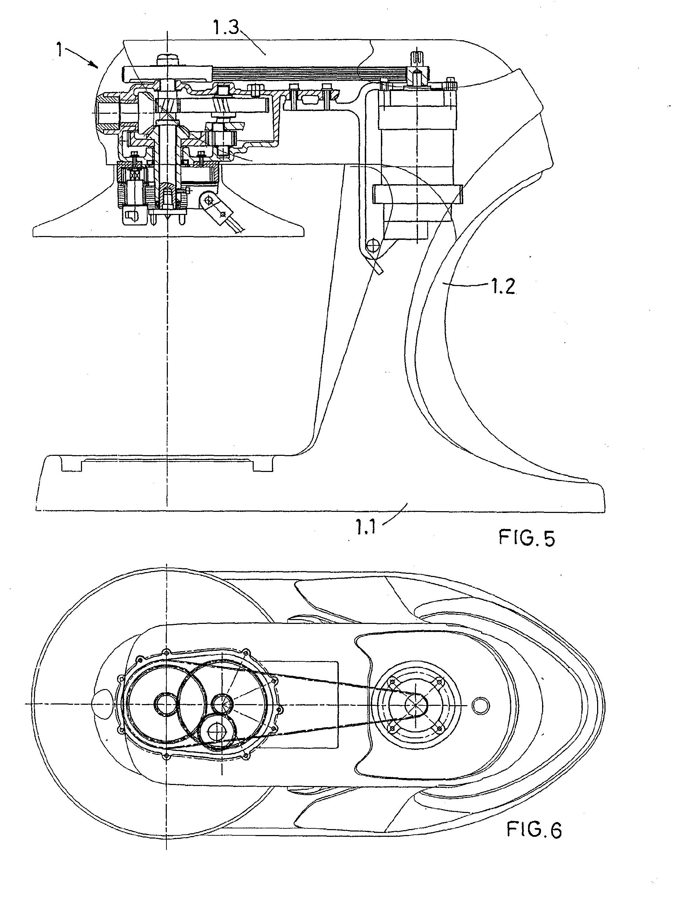

A pinion 9 is located under the gearwheel 7 and splined to the idling shaft 8. As shown in Figs. 3 and 6, the pinion 9 engages with an idle gearwheel 16, which gives motion to the gearwheel 10 fixed to the sleeve 10.1 mounted in idle position on the main high-speed shaft 5.

The transmission gear of the mechanism composed of pinion 9, idle gearwheel 16 and gearwheel 10 is 1/4, thus allowing for changing the speed from 800 rpm to 200 rpm, approximately.

The planetary support 11 is joined with known means to the gearwheel 10, through the sleeve 10.1 with conic pinion 10.2, rotating as the same speed as the gearwheel 10. 12 indicates the support for mixing utensils, which is fixed to a shaft 12.1 mounted in idle position on the planetary support 11 and provided with a pinion 13 engaged on a crown 14 with internal toothing.

The mechanism composed of the gearwheel 10, the sleeve 10.1, the planetary support 11, the shaft 12.1 with pinion 13 and the crown wheel 14 generates the planetary and rotatory eccentric movement of the mixing utensil that is typical of ordinary planetary mixers.

More specifically, when the planetary support 11 rotates to a maximum speed of 200 rpm, the support 12 of the mixing utensil rotates around its axis at a speed four times higher, up to 800 rpm. As a consequence, a single revolution motion of the planetary support 11 corresponds to four rotations of the mixer.

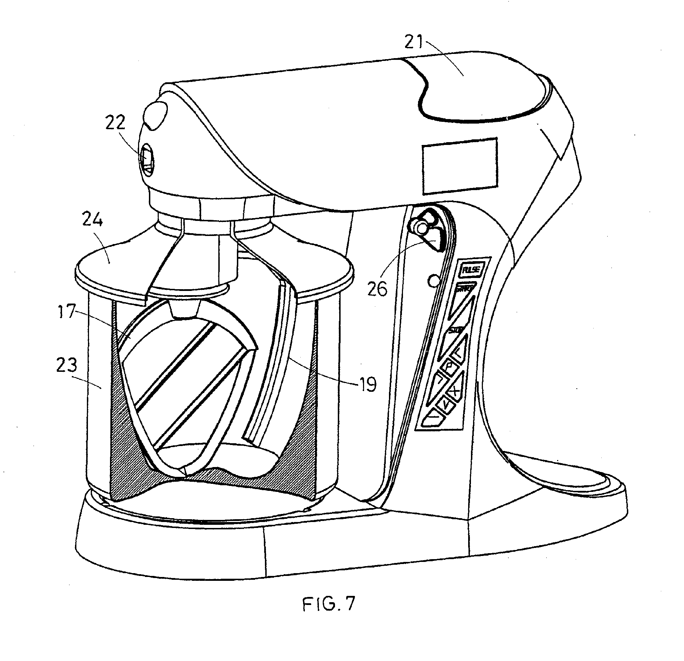

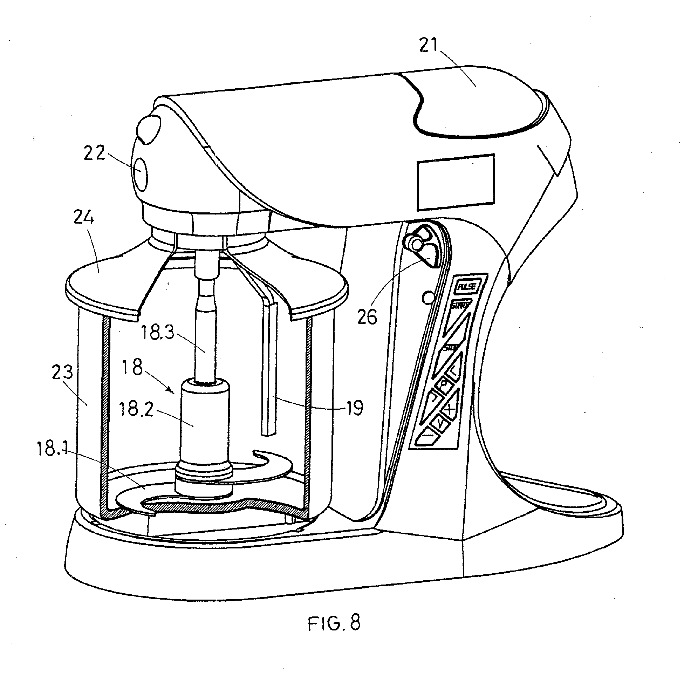

A scraper 19 can be fixed with known means to the planetary support 11, preferably in opposite position with respect to the mixer 17, as diagrammatically shown also in Figs. 7 and 8.

Fig. 8 also shows the operation of the cutter version of the multifunctional equipment of the invention. As described above, the cutting utensil is moved from above by the main shaft 5 at a maximum speed of 3,000 rpm. The cutting utensil 18 provides for a shaft 18.3 fixed with known means to the support 15, a short elastic pipe 18.2 and a pair of blades 18.1 fixed to the short elastic pipe 18.2, centred with known means with respect to the bottom of the container 23.

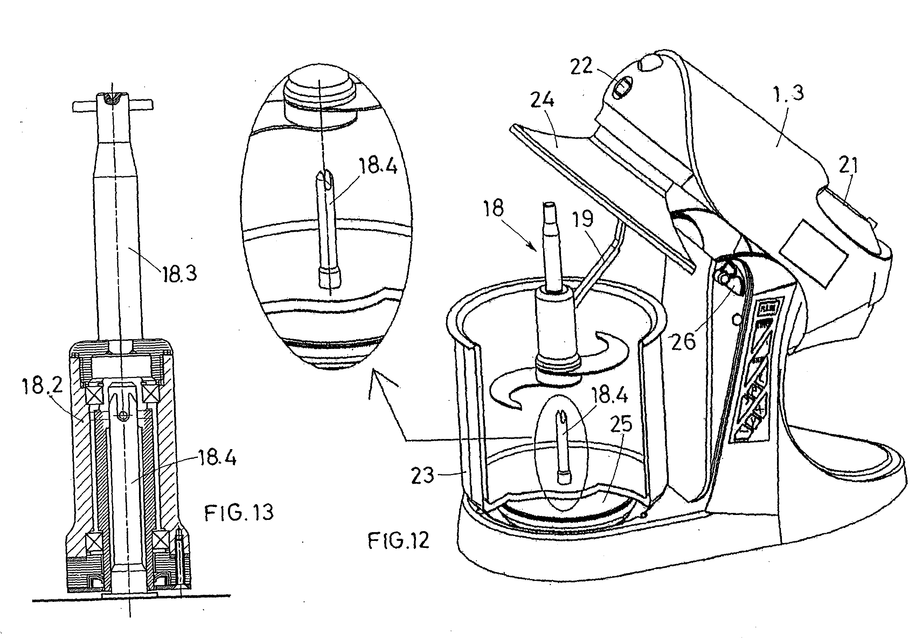

Figs. 12 and 13 show the known means used to centre these members in the container, which comprise a supporting element 18.4 anchored to the bottom of the container 23 in which the cutting utensil 18, and more exactly the short elastic pipe 18.2, is inserted in idle position.

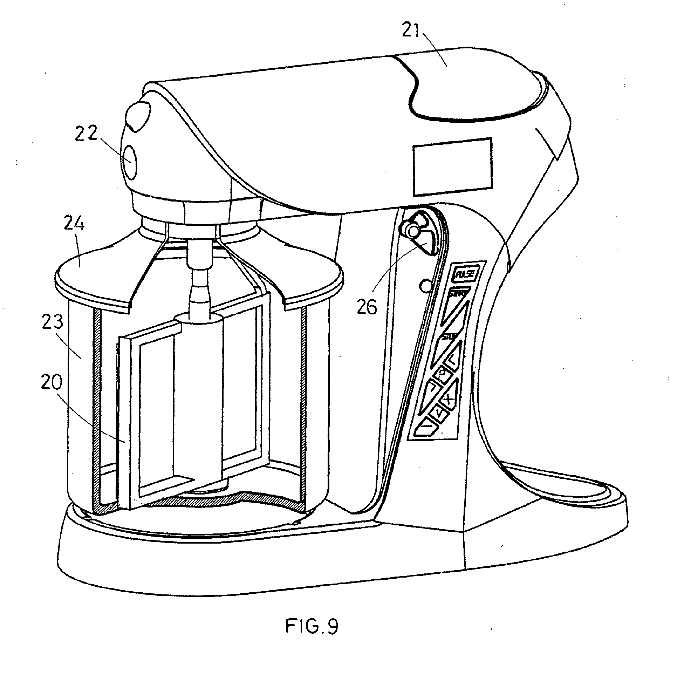

Fig. 9 shows the mixer version of the multifunctional equipment of the invention, with the mixing utensil 20 in central position with respect to the bottom of the container 23, likewise the cutting utensil 18. It must be noted that the mixing utensil 20, likewise the other utensils of the invention, is exclusively moved from above and does not require any other lower kinematic means, except for centring on the supporting elements 18.4.

The multifunctional equipment of the invention also provides for a power take-off 21 located on the arm 1.3 on the shaft 2.2 of the electric engine 2.1. The power take-off 21 can be used to connect high-speed accessories, such as a blender, for additional food processing operations. also simultaneously with the food processing operations carried out in the container 23.

Another power take-off 22 fixed to a conic pinion 22.1 is frontally located to permit the connection of low-speed accessories, such as meat mincers, graters, pasta die plates and cutters, and other accessories with horizontal motion. The power take-off 22 receives motion from the coupling of the conic pinion 22.1 and the conic pinion 10.2 fixed to the sleeve 10.1 of the gearwheel 10.

With special reference to Figs. 7, 8, 9, 11 and 12, the enclosed figures show some of the possible operational variants of the multifunctional equipment of the invention.

In particular, they only show the configurations of utensils and containers in the versions that allow for complete processing of the food product contained in the containers.

It appears evident that, for example, the presence of a mixing utensil 17 with reduced dimensions as not to interfere with the other utensils will allow for the simultaneous use with the cutting utensil 18.

Likewise, with suitable configuration and size of utensils and container, the mixing and scraping functions can be used simultaneously.

The multifunctional equipment of the invention provides for the possibility of heating or cooling the container 23 with known means and methods, without removing the container.

According to the known art, the containers 23 have a different configuration according to specific processing, as shown in Figs. 7, 8 and 9, are interchangeable and fixed to the multifunctional equipment 1 between the lid 24 and the base 1.1.

According to the known art, the lid 24 can be provided with upper openings to allow for the insertion of ingredients in the container 23.

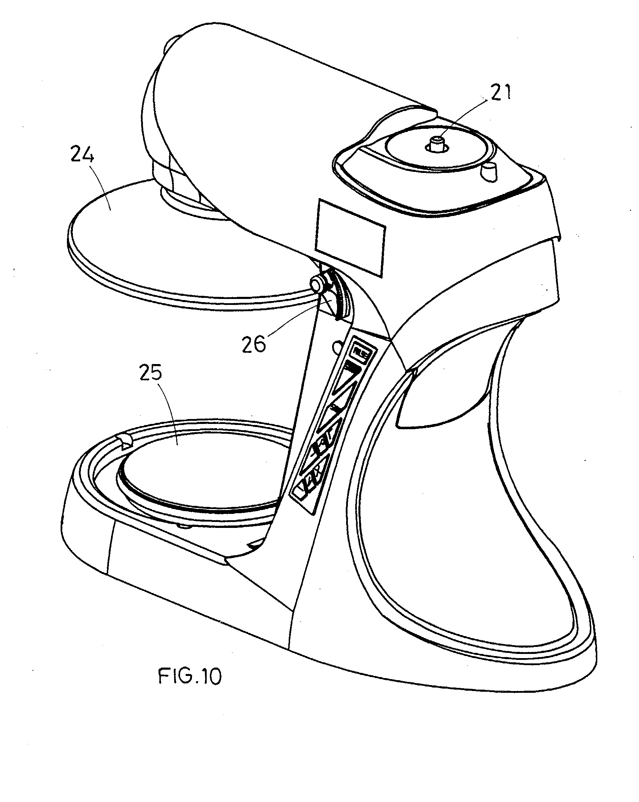

Fig. 10 shows an embodiment of the invention provided with an electric plate 25 used to heat the container 23 and ensure optimal mixing. Obviously, the heating of the container can be obtained in any other suitable way, such as a gas cooker, an induction cooker, a thermal carrier fluid coil coming from any suitable heat generator. Cooling can be easily obtained with means such as refrigerant fluid coil from a refrigerating machine.

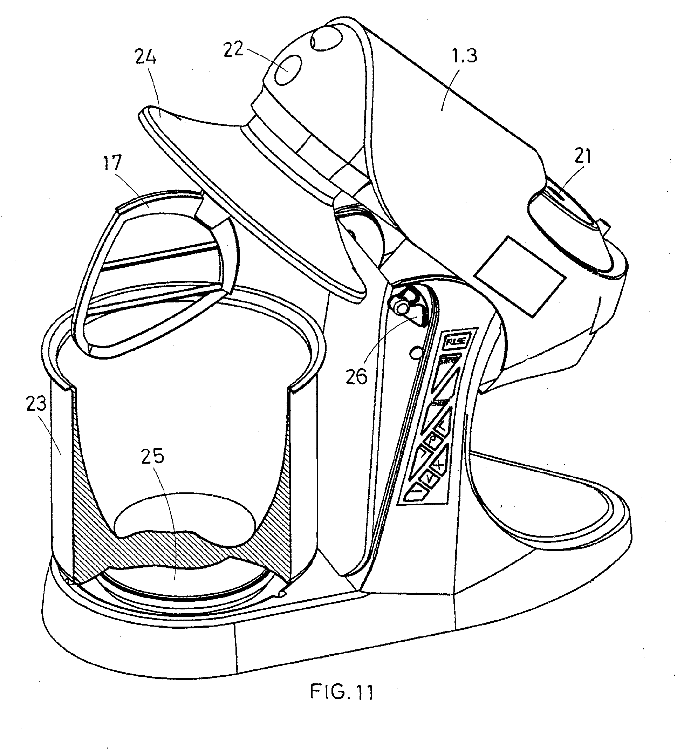

Finally, the multifunctional equipment is provided with an overturning mechanism that allows for the partial backward overturning of the arm 1.3, for easy utensil replacement and container detachment. The overturning movement shown in Figs. 11 and 12 is of known type and activated by a common key 26.

The characteristics of the invention and its advantages appear clear from he description above.

A first advantage of the invention is that a single equipment allows for the simultaneous use of the planetary and rotatory eccentric motion for mixing and blending functions and of the central rotatory motion for cutting function, thanks to the assembly of the main high-speed shaft coaxially with the planetary motion.

Another advantage of the invention is that the multifunctional equipment of the invention is provided with two high and low-speed motive power take-offs for the connection of additional utensils.

Another advantage of the multifunctional equipment of the invention is the fact that the container can be heated or cooled, with the possibility of combining and alternating the two operations to process and manufacture food products and reduce the problem of the bacteria developed during thermal treatments.

It appears evident that multiple variants of the multifunctional equipment of the invention are possible without leaving the scope of the inventive idea. In particular, the multifunctional equipment can be provided with any type of known utensil or container with special configuration for further processing.

## Claims

1. Multifunctional food-processing equipment, of the type comprising a body composed of a base (1.1), whose front part supports a container (23), while the rear part houses a vertical support structure (1.2) for the arm (1.3) that protrudes horizontally towards the container (23), whose lid (24) is associated with the arm (1.3), equipment being **characterised in that** it is provided with a first utensil support (12) located in eccentric position above the container (23) and a second utensil support (15) located in central position above the container (23), both being actuated by means of an electric engine (2.1) that drags into rotation a mechanism located at the end of the arm (1.3) and capable of dragging the utensil support (12) into planetary motion and low-speed rotation suitable for mixing and blending, while the other utensil support (15) is dragged together with the utensil support (12) into high-speed rotation suitable for cutting and mixing.

2. Equipment as defined in the preceding claim, **characterised in that** the mechanism located at the end of the arm (1.3) comprises:
- a main shaft (5) that rotates at a first speed
- a planetary support (11) that rotates coaxially to the shaft (5) at a second speed
- the utensil support (12) that rotates around its axis at a third speed and around the main shaft (5) at the same speed as the planetary support (11).

3. Equipment as defined in the preceding claims **characterised in that** the mechanism located at the end of the arm (1.3) comprises:
- the main high-speed shaft (5)
- a pinion (6) splined on the shaft (5)
- a gearwheel (7) splined on an idling shaft (8)
- a pinion (9) splined on the idling shaft (8)
- a gearwheel (10) fixed to the sleeve (10.1) mounted on the main high-speed shaft (5) in idle position
- the planetary support (11) joined to the gearwheel (10) by means of the sleeve (10.1) with conic pinion (10.2)
- the utensil support (12) fixed to a shaft (12.1) mounted in idle position on the planetary support (11) and provided with a pinion (13) engaged on a crown (14) with internal toothing
- the utensil support (15) mounted at the lower end of the main high-speed shaft (5).

4. Equipment as defined in claims 2 and 3, **characterised in that** the planetary support (11) is provided with fixing means (19.1) for a scraper (19).

5. Equipment as defined in one or more of claims 2, 3 and 4, **characterised in that** a first pulley (4) is splined on the main shaft (5) and dragged into rotation by means of a transmission belt (3) located within the arm (1.3) and wound around a second pulley (2.3) splined on the shaft (2.2) of the electric engine (2.1) housed inside the supporting structure (1.2).

6. Equipment as defined in one or more of the preceding claims, **characterised in that** the bottom of the container (23) is provided with a supporting element in central position (18.4) used to insert the cutting (18) or mixing (20) utensils on the utensil support (15).

7. Equipment as defined in one or more of the preceding claims, **characterised in that** a power take-off (21) is located on the shaft (2.2) of the electric engine (2.1) for the connection of high rotation speed utensils.

8. Equipment as defined in one or more of the preceding claims, **characterised in that** the front end of the arm (1.3) is provided with a power take-off (22) actuated by the idle gearwheel (10) for the connection of low rotation speed utensils.

9. Equipment as defined in one or more of the preceding claims, **characterised in that** it is provided with an overturning mechanism actuated with a key (26) that allows for the partial backward overturning of the arm (1.3) to replace the mixing (17), blending (20), cutting (18), scraping (19) utensils, as well as to extract the container (23) fitted between the lid (24) and the base (1.1).

10. Equipment as defined in one or more of the preceding claims, **characterised in that** known means are provided under the container (23) in order to heat or cool container (23).
